# FASCICULE DE BREVET EUROPEEN

(11) **EP 0 394 083 B1**
(45) Date de publication et mention de la délivrance du brevet: **09.06.1993**
(21) Numéro de dépôt: 90400874.5
(22) Date de dépôt: 30.03.1990
(51) Int. Cl.: G01P 3/48, F16C 19/52

(54) **Palier préassemblé à éléments codeur et capteur additionnels**
Vormontiertes Lager mit zusätzlichem Impulsgeber und Sensor
Pre-assembled bearing with additional encoding element and sensor

(30) Priorité: 18.04.1989 FR 8905096
(43) Date de publication de la demande: 24.10.1990
(73) Titulaire: S.N.R. ROULEMENTS, 74010 Annecy Cédex (FR)
(72) Inventeur: Hajzler, Christian, F-74000 Annecy (FR)
(74) Mandataire: Ernst-Schonberg, Michel

(56) Documents cités:
- EP-A- 0 092 605
- FR-A- 2 375 599
- FR-A- 2 558 223
- FR-A- 2 570 143
- FR-A- 2 599 794
- US-A- 3 716 121

## Description

L'invention concerne un palier préassemblé à éléments codeur et capteur additionnels du type comportant un roulement, un anneau magnétique codeur à pluralité de pôles nord et sud disposés circonférentiellement sur l'anneau d'un capteur.

La publication US-A-3,742,243 décrit un générateur de signaux dans lequel un rotor porte des aimants annulaires qui est monté sur un arbre tournant à proximité d'un capteur et séparé de ce dernier par un entrefer constant aussi réduit que possible.

La réalisation de l'entrefer nécessite beaucoup de soins. Par ailleurs, lorsque le rotor est monté sur un arbre tournant dont l'axe n'est pas exactement coaxial, l'ajustement préalable de l'anneau magnétique ne peut pas être réalisé.

La publication US-A-3,716,121 décrit un montage de capteur en contact avec un anneau codeur élastiquement flexible.

La publication EP-A-0092605 décrit un montage élastique de capteur en contact avec un anneau codeur sous l'action d'une force élastique de poussée axiale.

La publication FR-A-2570143 illustre un montage élastique de codeur produit par mise en forme à la presse dont le pied est inséré dans un organe support élastique monté sur une bague de roulement.

Ces montages conformes au préambule de la revendication ne permettent pas de compenser les tolérances de montage existantes entre les parties tournantes et fixes des dispositifs capteurs de signaux.

Selon l'invention ce problème est résolu conformément à la caractéristique de la revendication.

L'invention a donc principalement pour objet un palier préassemblé à corps roulants dont l'un au moins des éléments codeur ou capteur est combiné à un moyen de montage favorisant un déplacement omnidirectionnel de celui-ci dans le but d'obtenir notamment un auto-alignement desdits codeur et capteur avec un entrefer nul.

Le palier ainsi réalisé trouve avantageusement une application sur les colonnes de direction de véhicules automobiles.

D'autres caractéristiques et avantages de l'invention apparaîtront à la lecture d'exemples de réalisation non limitatifs en référence au dessin annexé.

La figure 1 est une demi-vue en coupe axiale d'un palier dont l'élément codeur est monté élastiquement sur une bague de roulement.

La figure 2 est une demi-vue en coupe axiale d'un palier dont l'élément capteur est monté élastiquement sur une bague de roulement.

La figure 3 est une demi-vue en coupe axiale d'un palier dont l'élément codeur est combiné à une bague de montage élastique.

Les figures 4 à 9 décrivent des exemples de réalisation du montage de l'élément codeur sur un type de bague élastique.

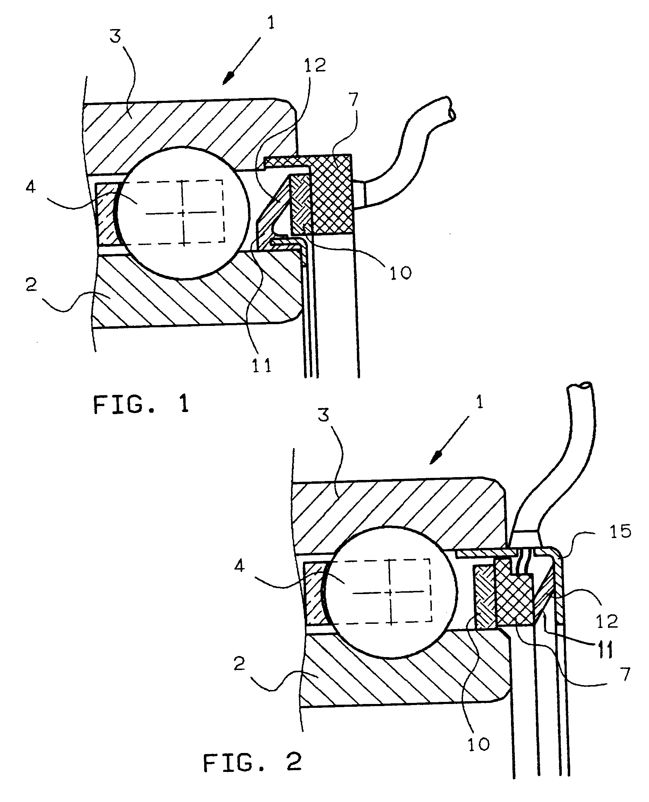

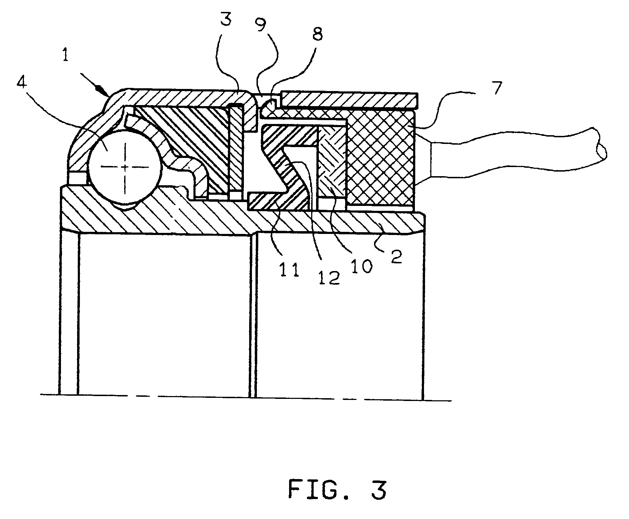

La figure 1 décrit un palier formé par un roulement à billes 1 constitué notamment par une bague intérieure 2 tournante, une bague extérieure 3 fixe, des chemins de roulement formés sur lesdites bagues et des corps roulants 4 au contact desdits chemins. La bague extérieure 3 s'étend coaxialement le long de la bague 2 et permet la fixation de l'élément capteur 7 immobilisé dans ladite bague extérieure 3 par tout moyen connu et notamment par des éléments d'accrochage 8 tels que représentés à la figure 3 reçus dans des poinçonnages 9 de ladite bague extérieure 3.

L'élément codeur 10 est solidarisé à une bague de montage 11 par une procédé de liaison conventionnel (collage, surmoulage ...) et est en contact de frottement avec l'élément capteur 7 étant entendu que lesdits capteur et codeur sont animés d'un mouvement relatif au cours du fonctionnement du roulement.

Selon l'invention, la bague de montage 11 a une section radiale déterminée qui lui confère une élasticité omnidirectionnelle. A cet effet, la bague 11 possède une zone fonctionnelle déformable sous l'effet de contraintes de flexion, de compression ou de cisaillement.

Selon les figures 1 et 3, la bague 11 possède une jupe déformable illustrée par un segment élastique 12.

Le contact entre le codeur 10 et le capteur 7 est de la sorte assuré dans toutes les positions relatives entre le codeur et le support du capteur quel que soit l'état de fonctionnement dynamique ou statique du codeur.

La bague 11 est par ailleurs solidarisée directement ou indirectement avec la bague 2 du roulement par tout procédé connu (frettage, collage, etc ...), et possède une section à pluralité de segments. Selon la figure 2, le codeur 10 est monté sur la bague 2 du roulement, tandis que le capteur 7 est encastré dans un disque déflecteur 15 monté sur la bague 3 du roulement. La bague de montage 11 possède une élasticité axiale et radiale conférée par le segment 12 dont les appuis axiaux sur le capteur 7 et sur le déflecteur 15 sont radialement décalés. Le capteur 7 solidarisé au flanc de la bague 11 est en appui constant sur le codeur 10, quelles que soient les conditions de montage du codeur.

Des exemples précités, il apparaît que la section de la bague 11 pourra varier d'un exemple de montage à l'autre sans sortir aucunement du champ de l'invention.

Par ailleurs, la bague 11 dans ses différentes formes de réalisation pourra être tout aussi bien collée ou frettée directement ou indirectement par interposition d'une douille de rigidification lors d'un montage sur un arbre ou sur une bague support.

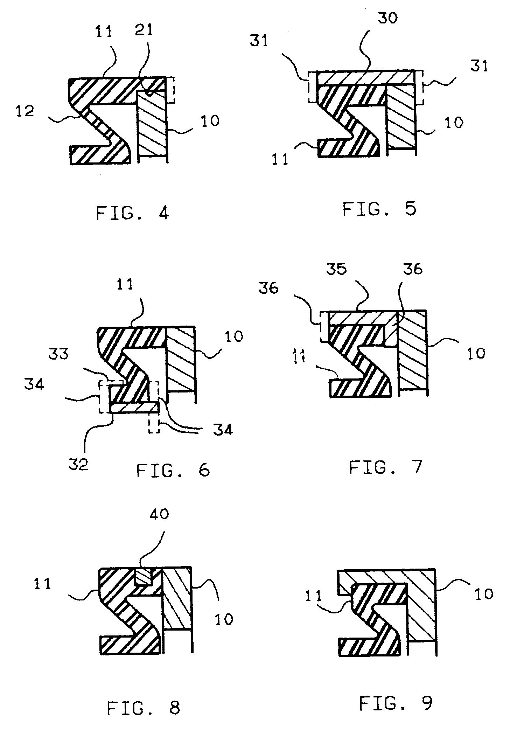

La figure 4 montre à titre d'exemple un élément codeur 10 en partie encastré dans la bague 11 qui peut avantageusement comporter un gorge de montage 21 du codeur 11. Cette disposition facilite notamment la liaison du codeur avec la bague.

Réciproquement, la figure 9 montre la bague 11 encastrée dans une gorge prévue sur une extension axiale de l'élément codeur 10.

La figure 5 illustre une unité de montage de l'élément codeur 10 et de la bague 11 qui fait application d'une douille annulaire 30 en tôle dans le but de favoriser l'opération de collage ou de surmoulage de la bague dans la douille et de conférer à l'ensemble une rigidité augmentée. La douille 30 peut par ailleurs comporter des épaulements 31 à l'une et/ou à l'autre de ses extrémités pour parfaire la liaison d'ensemble.

La figure 6 illustre une unité de montage qui fait application d'une douille 32 destinée à renforcer la portée de montage de la bague 11. La douille 32 peut être, le cas échéant, combinée à des coupelles de rigidification 33 ou présenter des bords de protection 34 des faces extérieures de la bague 11.

La figure 7 illustre une unité de montage dans laquelle la bague 11 est séparée de l'élément codeur 10 par le bord annulaire radial 36 d'une douille de maintien 35 extérieur au contact duquel est réalisée la liaison avec l'élément codeur.

La figure 8 illustre une unité assemblée dans laquelle un aimant additionnel 40 est monté sur la bague 11 dans le but de pouvoir capter un signal complémentaire en cours de fonctionnement du palier.

Des divers modes de réalisation de l'invention, il ressort que le contact entre le capteur et le codeur est aisément réalisable en cas de présence de défauts de centrage ou de montage.

Par ailleurs lorsque la surface de contact entre l'élément codeur et capteur est lubrifiée, il est possible d'assurer également l'étanchéité du palier.

Sans sortir du cadre de l'invention, il est bien évident que l'élément codeur peut-être intégré tout ou en partie dans la matière constitutive de la bague de montage telle que 11.

De même, les divers agencements précités relatifs au montage de l'élément codeur sont transposables ou adaptables à l'élément capteur, sans sortir pour autant du cadre de l'invention.

## Revendications

1. Palier préassemblé à éléments codeur et capteur additionnels du type comportant un anneau magnétique circulaire codeur (10) à pluralité de pôles Nord et Sud disposés circonférentiellement sur l'anneau codeur (10), un capteur (7) et une bague de montage circulaire (11) porte capteur ou codeur, l'élément capteur ou codeur étant en appui sur un flanc de cette bague, caractérisé par le fait que le codeur est accolé audit capteur et la bague de montage circulaire (11) possède une élasticité omnidirectionnelle conféré par une section élastiquement déformable sous l'effet de contraintes de flexion, de compression ou de cisaillement, et que ladite section est constituée par une paroi oblique (12) par rapport aux directions radiales et axiales du palier dont le pied est radialement décalé par rapport au flanc d'appui desdits éléments codeur ou capteur (10, 7).

2. Palier selon la revendication 1, caractérisé par le fait que la paroi oblique (12) de la bague circulaire (11) est raccordée à des segments de montage.

3. Palier selon la revendication 2, caractérisé par le fait que la paroi élastique affecte la forme d'un disque.

4. Palier selon la revendication 1, caractérisé par le fait que la bague de montage possède une structure composite dont un élément est formé à partir dune matière compressible.

5. Palier selon l'une quelconque des revendications 1 ou 2, caractérisé par le fait que la bague (11) est une partie maintenue par une douille (30, 32, 35) de rigidification.

6. Palier selon l'une quelconque des revendications 1 ou 2, caractérisé par le fait que la bague (11) et l'un au moins des éléments capteur (7) ou codeur (10) ont une position mutuelle d'encastrement.

7. Palier selon l'une quelconque des revendications 1 à 6, caractérisé par le fait que le contact entre l'élément codeur et l'élément capteur est lubrifié.

8. Palier selon la revendication 7 caractérisé par le fait que le contact entre l'élément codeur et l'élément capteur assure l'étanchéité dudit palier.

## Patentansprüche

1. Vormontiertes Lager mit zusätzlichen Codier- und Sensorteilen, das einen kreisförmigen magnetischen Codierring (10) mit einer Vielzahl von Nord- und Südpolen aufweist, die am Umfang des Codierrings (10) angeordnet sind, einen Sensor (7) und einen kreisförmigen Montagering (11) aufweist, der den Sensor oder den Codierer trägt, wobei sich der Sensor oder der Codierer auf einer Seite dieses Ringes abstützt, dadurch gekennzeichnet, daß der Codierer dem Sensor unmittelbar benachbart ist, daß der kreisförmige Montagering (11) eine in alle Richtungen wirkende Elastizität besitzt, die auf einem Querschnitt beruht, der bei Beaufschlagungen mit Biege-, Druck- oder Scherkräften elastisch verformbar ist, und daß dieser Querschnitt aus einer zu den radialen und axialen Richtungen des Lagers schräg angeordneten Wand (12) besteht, deren Fußteil bezüglich der Stützwand für den Codierer oder Sensor (10, 7) verschoben ist.

2. Lager nach Anspruch 1, dadurch gekennzeichnet, daß die schräge Wand (12) des kreisförmigen Ringes (11) mit Montageabschnitten verbunden ist.

3. Lager nach Anspruch 2, dadurch gekennzeichnet, daß die elastische Wand die Form einer Scheibe aufweist.

4. Lager nach Anspruch 1, dadurch gekennzeichnet, daß der Montagering einen zusammengesetzten Aufbau aufweist, von dem ein Teil aus einem kompressiblen Material besteht.

5. Lager nach einem der Ansprüche 1 oder 2, dadurch gekennzeichnet, daß der Ring (11) ein Bauteil ist, das durch eine Versteifungsbuchse (30, 32, 35) gehalten ist.

6. Lager nach einem der Ansprüche 1 oder 2, dadurch gekennzeichnet, daß der Ring (11) und wenigstens eines der Teile aus Fühler (7) oder Codierer (10) eine gegenseitige Eingriffsstellung aufweisen.

7. Lager nach einem der Ansprüche 1 bis 6, dadurch gekennzeichnet, daß die Berührungsfläche zwischen dem Codierteil und dem Sensorteil geschmiert ist.

8. Lager nach Anspruch 7, dadurch gekennzeichnet, daß die Berührungsfläche zwischen dem Codierteil und dem Fühlerteil die Abdichtung des Lagers gewährleistet.

## Claims

1. A pre-assembled bearing with additional encoder and sensor members of the type comprising a circular magnetic encoder ring (10) with a plurality of north and south poles disposed peripherally on the encoder ring (10), a sensor (7) and a circular assembly ring (11) supporting the sensor or encoder, the sensor or encoder member bearing on a flank of this ring, characterized in that the encoder is coupled with the sensor and the circular assembly ring (11) has elasticity in all directions, provided by an elastically deformable section, under the effect of bending, compression or shearing stresses and in that this section is formed by a wall (12) inclined with respect to the radial and axial directions of the bearing whose foot is radially offset with respect to the bearing flank of the encoder or sensor members (10, 7).

2. A bearing as claimed in claim 1, characterized in that the inclined wall (12) of the circular ring (11) is connected to assembly segments.

3. A bearing as claimed in claim 2, characterized in that the elastic wall has the shape of a disc.

4. A bearing as claimed in claim 1, characterized in that the assembly ring has a composite structure, one member of which is formed from a compressible material.

5. A bearing as claimed in any one of claims 1 or 2, characterized in that the ring (11) is partially retained by a reinforcing sleeve (30, 32, 35).

6. A bearing as claimed in any one of claims 1 or 2, characterized in that the ring (11) and at least one of the sensor (7) or encoder ( 10) members have a mutual embedded position.

7. A bearing as claimed in any one of claims 1 to 6, characterized in that the contact between the encoder member and the sensor member is lubricated.

8. A bearing as claimed in claim 7, characterized in that the contact between the encoder member and the sensor member ensures the leak-tightness of the bearing.
